# EUROPÄISCHE PATENTSCHRIFT

(11) **EP 0 950 476 B1**
(45) Veröffentlichungstag und Bekanntmachung des Hinweises auf die Patenterteilung: **09.07.2003**
(21) Anmeldenummer: 99107524.3
(22) Anmeldetag: 15.04.1999
(51) Int. Cl.: B25J 15/04, B25J 9/10

(54) **Vorrichtung zum Antrieb einer Roboterhand**
Drive for a robot hand
Dispositif d'entraînement pour main de robot

(30) Priorität: 17.04.1998 DE 19817606
(43) Veröffentlichungstag der Anmeldung: 20.10.1999
(73) Patentinhaber: KUKA Roboter GmbH, 86165 Augsburg (DE)
(72) Erfinder: Alwin Berniger, 86159 Augsburg (DE); Wolfgang Bohlken, 86316 Friedberg (DE)
(74) Vertreter: Lempert, Jost, Dipl.-Phys. Dr. rer.nat.

(56) Entgegenhaltungen:
- US-A- 4 047 448
- US-A- 4 548 097
- US-A- 5 305 652

## Beschreibung

Die Erfindung betrifft eine Vorrichtung zum Antrieb einer Roboterhand an einem Roboterarm, mit mehreren Gelenkwellen.

An einem Roboterarm, der zum Tragen einer Roboterhand vorgesehen ist, sind die zum Antrieb der Roboterhand vorgesehenen, von Elektromotoren angetriebenen Gelenkwellen axial fest angeordnet (US 4 548 097, US 4 047 448, US 5 305 652). Bei der Montage der Roboterhand bzw. ihres Getriebekopfes treten häufig Beschädigungen an den Motoren durch zu starke axiale Kräfte auf die Wellenenden der Gelenkwellen auf, wenn die Enden der Antriebswellen der Hand nicht leicht genug in die Hülsen der Gelenkwellen gleiten. Dies gilt insbesondere bei evolventen-verzahnten Wellenkupplungen. Darüber hinaus ist die Montage aufwendig und kompliziert, da gleichzeitig der Getriebekopf der Roboterhand bzw. sein Gehäuse am Roboterarm befestigt werden muss und die Wellenkupplungen von Getriebekopf und Gelenkwellen miteinander in Eingriff gebracht werden müssen.

Der Erfindung liegt daher die Aufgabe zugrunde, die Montage einer Roboterhand bzw. ihres Getriebekopfes an einem Roboterarm zu erleichtern und gleichzeitig die Gefahr von Beschädigungen der Motoren auszuschließen.

Erfindungsgemäß wird die genannte Aufgabe bei einer Vorrichtung der eingangs genannten Art dadurch gelöst, daß die Gelenkwellen mit ihren handfernen Enden an einem zum Roboterarm verschiebbaren Lagerschild gelagert sind.

Dadurch, daß das handferne Lagerschild am Roboterarm axial verschiebbar angeordnet ist, kann es vor Montage des Getriebekopfes der Roboterhand (nach Lösen von Befestigungsschrauben) ausgerückt, d.h. vom Roboterarm etwas fortgeschoben werden, wobei es die an ihm axial festgelegten Wellenkupplungen mitnimmt. Die erforderliche Verschiebung ist dabei etwas größer als die Eingriffslänge der Wellenkupplungen.

Anschließend kann der Getriebekopf bzw. sein Gehäuse am Roboterarm festgelegt werden. Im folgenden wird der Lagerschild mit den Gelenkwellen wieder eingerückt, wobei die Wellenkupplungen sukzessive in Eingriff gelangen. Schließlich wird der Lagerschild am Roboterarm festgeschraubt. Dadurch, daß die Verbindung von Getriebegehäuse mit dem Roboterarm einerseits und der Wellenkupplungen andererseits getrennt wird, ist eine einfachere Montage möglich, bei der darüber hinaus beim sukzessiven Ineingriffbringen der Kupplungen auf die Motoren wirkende schädliche Axialkräfte und damit auch eine Beschädigung der Motoren vermieden werden.

Bevorzugte Ausgestaltungen der Erfindung zeichnen sich dadurch aus, daß der Lagerschild mittels Führungsstiften verschiebbar gelagert ist, wobei insbesondere der Lagerschild mittels Schrauben in Betriebsstellung am Roboterarm fixierbar ist. In Weiterbildung ist vorgesehen, daß Motoren zum Antrieb der Gelenkwellen am Lagerschild festgelegt sind.

Weitere Vorteile der Erfindung ergeben sich aus den Ansprüchen und aus der nachfolgenden Beschreibung, in der ein Ausführungsbeispiel der Erfindung unter Bezugnahme auf die Zeichnung im einzelnen erläutert ist. Dabei zeigt:
- Fig. 1: eine perspektivische Darstellung einer erfindungsgemäßen Vorrichtung zum Antrieb einer Roboterhand mit den motorseitigen Elementen in Explosionsdarstellung;
- Fig. 2: eine perspektivische Darstellung ähnlich der der Fig. 1 mit motorfernen Elementen in Explosionsdarstellung;
- Fig. 3: eine Schnittdarstellung mit ausgerückten Gelenkwellen; und
- Fig. 4: eine Schnittdarstellung mit eingerückten Gelenkwellen.

Die erfindungsgemäße Vorrichtung zum Antrieb einer Roboterhand an einem Roboterarm weist einen Roboterarm 1 auf, der einen Getriebekopf 2 für eine Roboterhand trägt. Der Antrieb des Getriebekopfes 2 erfolgt über drei den Roboterarm 1 durchragende Gelenkwellen 4, 5, 6, die an ihrem hand- und getriebekopffernen Ende (bei 7) an einem handfernen Lagerschild 8 gelagert sind. Die Gelenkwellen 4-6 werden über am Lagerschild 8 befestigbare Elektromotoren 9, 11, 12 angetrieben.

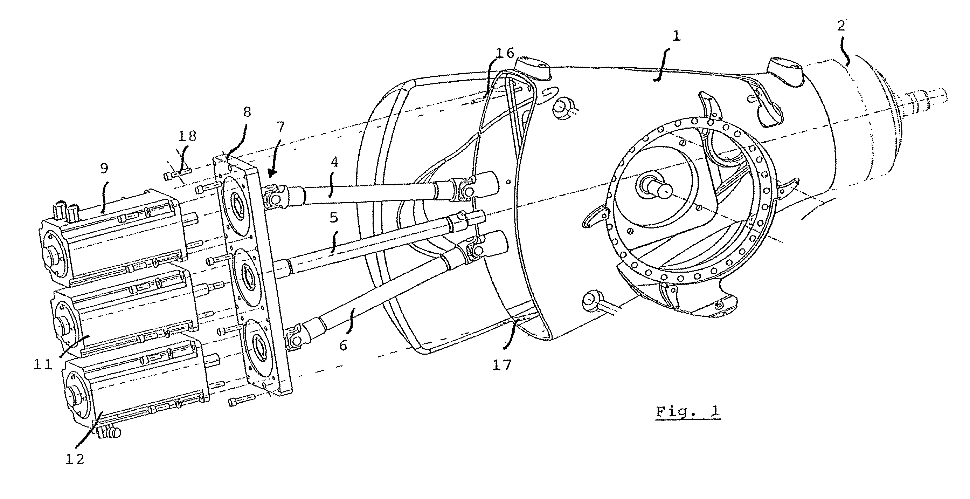

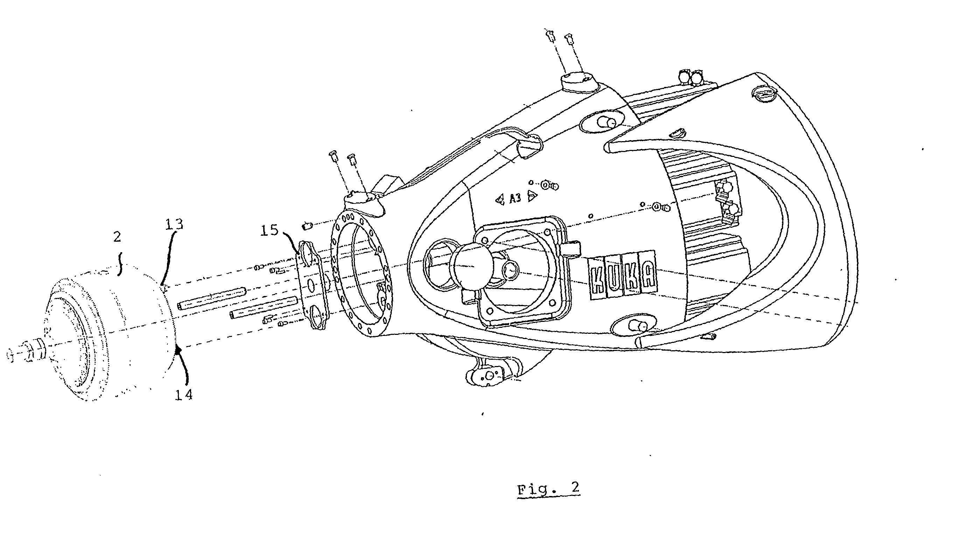

Die Antriebsübertragung von den Gelenkwellen 4-6 auf die Getriebe des Getriebekopfes 2 erfolgt über Wellenkupplungen, die einerseits an den getriebekopfseitigen Enden der Gelenkwellen 4-6 und andererseits am Getriebekopf 2 mit Kupplungsstiften 13 (in der Fig. 2 sind nur die beiden äußeren sichtbar) bzw. einer Aufnahme 14 ausgebildet sind. Die Wellenkupplungen können als evolventen-verzahnte ausgebildet sein. Die getriebekopfseitigen Enden der Gelenkwellen 4-6 sind dabei in einem fest am getriebekopfseitigen Ende des Roboterarms 1 angebrachten Lagerschild 15 verschieblich gelagert.

Das motorseitige Lagerschild 8, an dem die diesem zugewandten Enden der Gelenkwellen 4-6 axial fest gelagert sind, ist über am Roboterarm 1 vorgesehene Führungsstifte 16, 17 entlang der Achsrichtung der mittleren Gelenkwelle 5 und dementsprechend entlang der Haupterstreckungsrichtung der Gelenkwellen 4, 6 am Roboterarm 1 verschiebbar gelagert. Das Lagerschild 8 kann mittels Befestigungsschrauben 18 am Roboterarm 1 axial festgelegt werden.

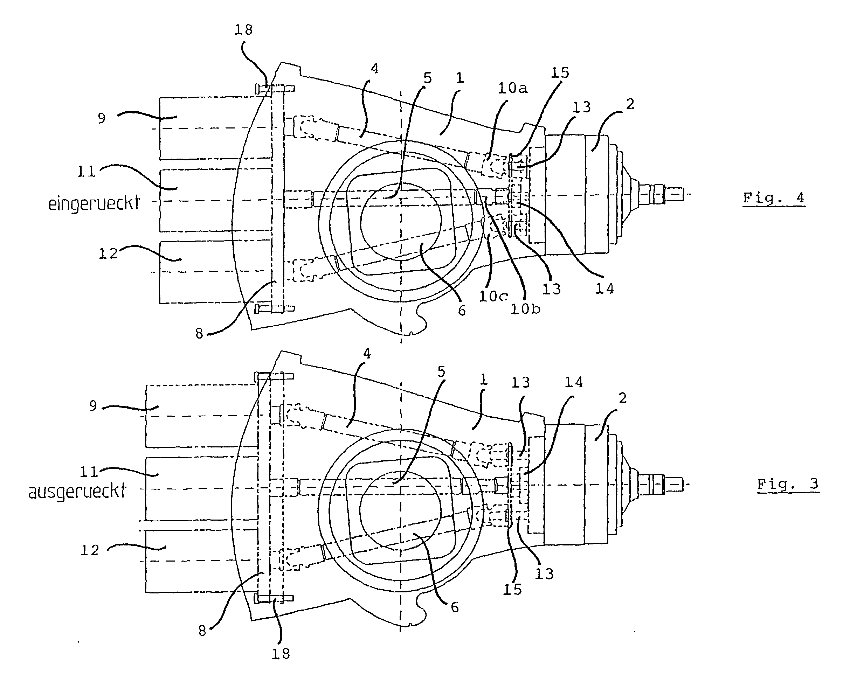

Zur Montage der Roboterhand bzw. ihres Getriebekopfes 2 wird das Lagerschild 8 ausgerückt, d.h. entlang der Führungsstifte 16, 17 so weit vom Roboterarm 1 um die Eingriffslänge der Wellenkupplungen 10a-10c ausgerückt, daß bei montiertem Getriebekopf 2 dessen Kupplungsteile 13, 14, 15 nicht mehr mit den entsprechenden Kupplungsteilen der Gelenkwellen 4-6 in Eingriff kommen, wie dies in Fig. 3 dargestellt ist. Anschließend kann der Getriebekopf 2 am Roboterarm 1 festgelegt werden. Anschließend wird der Lagerschild 8 eingerückt, d.h. entlang der Führungsstifte 16, 17 in Richtung auf den Getriebekopf 2 geschoben, wobei die Wellenkupplungen 10a-10c sukzessive in Eingriff gelangen. Die Getriebeteile des Wellenkopfes 2 können dabei jeweils von Hand derart gedreht werden, daß bei weiterem Einrücken des Lagerschilds 8 und demgemäß Verschieben der Gelenkwellen 4-6 jeweils der Eingriff der Wellenkupplungen erfolgt.

Nach vollständigem Einrücken des Lagerschilds 8 wird dieser mittels der Schrauben 18 am Roboterarm 1 festgelegt.

Bei dem vorstehend beschriebenen Vorgang können sich die Motoren 9, 11, 12 am Lagerschild befinden; sie können aber auch nachträglich an diesem angebracht werden.

## Patentansprüche

1. Vorrichtung zum Antrieb einer Roboterhand an einem Roboterarm, mit mehreren Gelenkwellen, **dadurch gekennzeichnet, daß** die Gelenkwellen (4, 5, 6) mit ihren handfernen Enden an einem zum Roboterarm verschiebbaren Lagerschild (8) gelagert sind.

2. Vorrichtung nach Anspruch 1, **dadurch gekennzeichnet, daß** der Lagerschild mittels Führungsstiften (16, 17) verschiebbar gelagert ist.

3. Vorrichtung nach Anspruch 1 oder 2, **dadurch gekennzeichnet, daß** der Lagerschild mittels Schrauben (18) in Betriebsstellung am Roboterarm (1) fixierbar ist.

4. Vorrichtung nach einem der vorangehenden Ansprüche, **dadurch gekennzeichnet, daß** Motoren (9, 11, 12) zum Antrieb der Gelenkwellen (4, 5, 6) am Lagerschild festgelegt sind.

## Claims

1. Device for driving a robot hand on a robot arm having a plurality of cardan shafts, **characterized in that** the cardan shafts (4, 5, 6) are borne at their ends distant from the hand on a bearing plate (8) which can be displaced relative to the robot arm.

2. Device according to claim 1, **characterized in that** the bearing plate is borne in a displaceable fashion using guide pins (16, 17).

3. Device according to claim 1 or 2, **characterized in that** the bearing plate can be mounted to the robot arm (1) in the operating position using bolts (18).

4. Device according to any one of the preceding claims, **characterized in that** motors (9, 11, 12) are borne on the bearing plate for driving the cardan shafts (4, 5, 6).

## Revendications

1. Dispositif d'actionnement d'une main de robot portée par un bras de robot comprenant plusieurs arbres articulés, **caractérisé en ce que** les arbres articulés (4,5,6) sont montés sur palier par leurs extrémités éloignées de la main de robot sur une platine (8) déplaçable vers le bras de robot.

2. Dispositif selon la revendication 1, **caractérisé en ce que** la platine est montée déplaçable au moyen de broches de guidage (16,17).

3. Dispositif selon la revendication 1 ou 2, **caractérisé en ce que** la platine peut être fixée au bras de robot (1) en position de fonctionnement au moyen de vis (18).

4. Dispositif selon l'une quelconque des revendications précédentes, **caractérisé en ce que** des moteurs (9,11,12) sont fixés sur la platine pour l'entraînement des arbres articulés (4,5,6).
